# EUROPÄISCHE PATENTSCHRIFT

(11) **EP 3 755 186 B1**
(45) Veröffentlichungstag und Bekanntmachung des Hinweises auf die Patenterteilung: **17.07.2024**
(21) Anmeldenummer: 18708074.2
(22) Anmeldetag: 21.02.2018
(51) Int. Cl.: A47G 29/14, A47G 29/22, A47G 29/12, E06B 3/26, E06B 3/38, B64C 39/02

(54) **FENSTER-, TÜR-, SCHRÄGDACH-, ODER FASSADENELEMENT MIT EINER VORRICHTUNG ZUM VERSAND ODER ZUM EMPFANG VON BRIEF- UND PAKETSTÜCKGUT ,DAZU AUSGELEGT, DASS DAS BRIEF- UND PAKETSTÜCKGUT VON EINEM UNBEMANNTEN LUFTFAHRZEUG ABHOLBAR ODER ZUSTELLBAR IST**
ELEMENT FOR A WINDOW, DOOR, PITCHED ROOF OR FACADE, COMPRISING A DEVICE FOR SENDING OR RECEIVING LETTERS AND PARCELS FROM AN UNMANNED AIR VEHICLE
ÉLÉMENT DE FENÊTRE, DE PORTE, DE TOITURE INCLINÉE OU DE FAÇADE, COMPRENANT UN DISPOSITIF POUR L'ENVOI OU LA RÉCEPTION D'UNE LETTRE OU D'UN COLIS PAR UN AÉRONEF SANS PILOTE

(43) Veröffentlichungstag der Anmeldung: 30.12.2020
(73) Patentinhaber: SCHÜCO International KG, 33609 Bielefeld (DE)
(72) Erfinder: HANKE, Carsten, 33729 Bielefeld (DE)
(74) Vertreter: Specht, Peter
(86) Internationale Anmeldenummer: PCT/EP2018/054206
(87) Internationale Veröffentlichungsnummer: WO 2019/161889

(56) Entgegenhaltungen:
- WO-A1-2016/089066
- WO-A1-2017/075907
- WO-A1-2017/196190
- DE-A1- 102015 209 127
- DE-A1- 102015 209 127
- US-A1- 2013 306 249
- US-A1- 2016 101 874

## Beschreibung

Die Erfindung betrifft ein Fenster- oder Türelement zum Einbau in eine Gebäudeöffnung einer Wand, mit einer Vorrichtung zum Versand oder zum Empfang von Brief- und Paketstückgut, wobei die Vorrichtung dazu ausgelegt ist, dass das Brief- und Paketstückgut von einem unbemannten Luftfahrzeug abholbar oder zustellbar ist, nach dem Oberbegriff des Anspruchs 1. Kurz wird diese Vorrichtung auch synonym nachfolgend eine "Vorrichtung zum Empfang und Versand von Brief- und Paketstückgut mit einem unbemannten Fluggerät" genannt. Brief- und Paketstückgut wird nachfolgend auch kurz als Postgut bezeichnet.

Im Folgenden wird der Begriff "Drohne" verwendet. Unter einer Drohne ist im der Ansprüche und der Beschreibung der vorliegenden Erfindung ein unbemanntes Luftfahrzeug/Fluggerät zu verstehen, das ohne eine an Bord befindliche Besatzung autark durch einen an Bord befindlichen Computer oder vom Boden über eine Fernsteuerung betrieben und navigiert werden kann. Dabei ist das unbemannte Luftfahrzeug im Sinne der vorliegenden Erfindung vorzugsweise als senkrecht startendes und landendes unbemanntes Luftfahrzeug ausgelegt. Eine häufig - aber nicht ausschließlich - anzutreffende Bauweise eines solchen Luftfahrzeugs ist der sog. Quadrokopter. Ein Quadrokopter ist ein Luftfahrzeug, das vier in einer Ebene angeordnete, senkrecht nach unten wirkende Rotoren oder Propeller benutzt, um Auftrieb und durch Neigung der Rotorebene auch Vortrieb zu erzeugen.

Die US 2013/306249 offenbart ein Fenster mit einem Blendrahmen, einem schwenkbaren Außenflügel und einem schwenkbaren Innenflügel, wobei zwischen diesen im Blendrahmen eine Art Aufnahmebereich ausgebildet ist.

Drohnen sollen auch zum Versand oder Empfang von Brief- und Paketstückgut eingesetzt werden. Damit einhergehen sollen im Vergleich mit einer straßenfahrzeugbasierten Postgutzustellung eine Reduzierung des Straßenverkehrs, eine zeitliche Beschleunigung des Lieferprozesses, eine Verringerung der Schadstoffbelastung und insgesamt eine deutliche Kostensenkung. Mit herkömmlichen Mitteln schwierig oder umständlich zu erreichende Orte können zudem einfacher und schneller beliefert werden.

In den letzten Jahren sind bereits verschiedene bauliche Konstruktionen mit einer Vorrichtung zum Versand oder zum Empfang von Brief- und Paketstückgut vorgeschlagen worden, die jedoch verschiedene Nachteile aufweisen.

So wird in der DE 10 2015 209 127 A1 eine Art Annahmestation zur Belieferung durch unbemannte Fluggeräte auf einem Dach geschaffen, die sowohl einen motorischen Verschluss als auch eine Hubvorrichtung (Teleskopvorrichtung) aufweist. Bei Nichtbenutzung ist der Verschluss bündig mit dem Dach ausgerichtet, während sie zum Benutzen geöffnet wird, um die Hubvorrichtung auszufahren, um mit ihr ein Paket zu empfangen. Nachteilig ist insbesondere die optische Beeinträchtigung der Gebäudehülle durch die offenbarten Lösungen. Die separate Vorrichtung hebt sich optisch deutlich vom Gebäude ab, auch wenn von der Vorrichtung nur ein bündig angeordneter Deckel sichtbar ist. Die Vorrichtung nach der DE 10 2015 209 127 A1 kann darüber hinaus nicht in einer senkrechten Gebäudewand angeordnet werden.

Die WO 2017 / 125084 A1, die als nächstliegender Stand der Technik angesehen wird, beschreibt hingegen ein unbemanntes Luftfahrzeug-Express-system, basierend auf einem steuerbaren Fenster. Dieses weist einen Flügel auf, der beweglich am Grund des Fensters -also durch eine horizontale Drehachse- beweglich angeschlagen ist. Wenn der Flügel geöffnet ist, bildet er eine horizontale Plattform aus, auf der das unbemannte Luftfahrzeug parken kann. Allerdings sind die Vorrichtungen nur unvollkommen zum Versand und zum Empfang von Postgut geeignet, da sie aufgrund der verwendeten Mechaniken nicht optimal für Landungen und Starts geeignet sind.

Bei der WO 2017 / 125084 A1 sowie nach der technischen Lehre der DE 10 2015 209 127 A1 muss zudem mit wärmdämmtechnischen Problemen gerechnet werden, da die beschriebenen Lösungen keine besondere Dämmeigenschaften aufweisen und deshalb in einer wärmegedämmten Gebäudehülle eine Kältebrücke darstellen.

Die Erfindung hat demnach die Aufgabe, ein Fenster- oder Türelement mit einer Vorrichtung für den Versand oder den Empfang von Brief- und Paketstückgut durch unbemannte Luftfahrzeuge bereitzustellen, das die genannten Nachteile verbessert, d.h. eine optische Verbesserung darstellt und insbesondere erhöhte wärmedämmtechnische Ansprüche an moderne Gebäude bzw. Gebäudehüllen erfüllt.

Die Erfindung löst diese Aufgabe durch den Gegenstand des Anspruchs 1. Vorteilhafte Ausgestaltungen der Erfindung sind den Unteransprüchen zu entnehmen.

Derart kann auf einfacher Weise eine verbesserte Wärmedämmung an dem Element erreicht werden, insbesondere, wenn Außenflügel - und Innenflügel mit einer Steuervorrichtung so gesteuert werden, dass sie nur zeitlich versetzt geöffnet oder geschlossen werden können. Dies ist vorteilhaft, aber nicht unbedingt zwingend. An einem Gebäude kann mit der Schleuse ggf. auch gezielt eine gewisse Lüftungswirkung erzielt werden, die durchaus gewünscht sein kann, um beispielsweise durch kurzzeitiges Öffnen beider Flügel um einen gewissen Spalt ein gewisses Lüften zu ermöglichen.

Es ist erfindungsgemäß auch vorgesehen, dass die Vorrichtung zum Empfang und Versand von Paketstückgut mit einem unbemannten Fluggerät eine dem Außenflügel zugeordnete Schubvorrichtung und/oder Schwenkvorrichtung aufweist, mit welcher der Landebereich und/oder das Aufnahmeelement für das Brief- oder Paketgut teleskopartig in eine weiter aus der Fenster- oder Türebene beabstandete Position bringbar ist als diese an dem Außenflügel direkt erreichbar ist. Denn dies erleichtert das Landen und Starten des Fluggerätes.

Der Zwischenraum wird an seinem Umfang umlaufend vorzugsweise von wenigstens einem Blendrahmen begrenzt. Er kann aber auch umlaufend von einem Mauerwerk oder dgl. begrenzt sein.

Die erfindungsgemäßen Fenster- oder Türelemente oder dergleichen können in Öffnungen beliebiger Gehäuse verwendet werden, wie zum Beispiel in Brief- und Paketaufnahmestationen bzw. -behältern. Die Elemente sind dabei so ausgelegt, dass sie zur Aufnahme von Brief- und Paketstückgut durch Drohnen verwendbar sind. Vorzugsweise sind die Elemente dergestalt ausgelegt, dass sie Witterungseinflüsse, wie z.B. Wind, Feuchtigkeit, Temperaturunterschiede etc. zum Gebäudeinneren in erhöhtem Maße bis hin zu Passivhaus-Standard abhalten und insofern entsprechend gute Dämm- und Dichtungseigenschaften aufweisen.

Erfindungsgemäß ist vorgesehen, dass der Zwischenraum im geschlossenen Zustand des Fenster- oder Türelements die Vorrichtung aufnimmt. Derart ist diese gut geschützt untergebracht, wenn kein Postgut zu empfangen oder zu versenden ist. Zudem wird die Optik des Gebäudes weder außen noch innen von der Vorrichtung beeinträchtigt.

Ein Schrägdach ist ein Dach mit einem Neigungswinkel zwischen 10° und 80° zur Horizontalen.

Es ist erfindungsgemäß auch vorgesehen, dass der Zwischenraum im geschlossenen Zustand zur Aufnahme bzw. Zwischenlagerung des Brief- oder Paketstückgutes ausgelegt ist

Es kann vorteilhaft vorgesehen sein, dass die Vorrichtung zum Empfang und Versand von Brief- oder Paketstückgut einen Landebereich zum Landen des Fluggerätes für das Brief- oder Paketgut und/oder einen Aufnahmebereich zum Aufnehmen oder Abheben des Brief- oder Paketgut aufweist.

Es ist aus konstruktiver und optischer Hinsicht vorteilhaft, wenn der Außenflügel und der Innenflügel zumindest im geschlossenen Zustand parallel zueinander ausgerichtet sind.

Aus kinematischer Hinsicht kann vorteilhaft vorgesehen sein, dass der Außenflügel um eine horizontale Achse in einer Öffnungsbewegung nach außen dreht bzw. schwenkbar ist. Denn derart kann einfach eine horizontale Position erreicht werden, was vorteilhaft ist, um am Aufnahmebereich das Postgut entgegen zu nehmen oder zu versenden.

Dagegen kann der Innenflügel so ausgelegt sein, dass er in einer Öffnungsbewegung um eine vertikale Achse oder horizontale Achse dreht oder parallel ausstellbar ausgelegt ist. Hierdurch werden die Entnahme und/oder das Einbringen des Postgutes vom Innenraum her in einfacher Weise möglich, ohne dass auf eine Wärmedämmung durch eine Luftschleuse zwischen Innen und Außen verzichtet werden muss.

Nach einer anderen vorteilhaften Variante kann vorgesehen sein, dass der Außenflügel einen Flügelrahmen und ein Flächenelement aufweist und/oder dass der Innenflügel einen Flügelrahmen und ein Flächenelement aufweist und/oder dass einer oder mehrere Blendrahmen vorgesehen sind, an dem oder an denen der Innen- und der Außenflügel beweglich gehalten sind.

Es können zudem einer, mehrere oder sämtliche der Blend- und Flügelrahmen in wärmegedämmter Ausführung ausgeführt sein, insbesondere derart, dass bei einer Verwendung von Metall, insbesondere Aluminium vorzugsweise von innen nach au-ßen an dem jeweiligen Rahmen ein mehrschichtiger Aufbau mit einem oder mehreren Metall-, insbesondere Aluminiumprofilen und wenigstens einer dazwischen angeordneten Isolierprofilebene aus Isolierprofilen aus Kunststoff vorgesehen ist.

Nach einer nicht beanspruchten Ausführungsvariante bei dem das Element wenigstens einen Flügel aufweist - einen Außenflügel zum Verschließen und Öffnen einer Gebäudeöffnung - wobei diesem Außenflügel eine Schubvorrichtung zugeordnet ist, mit welcher ein Landebereich und/oder ein Aufnahmeelement für das Brief- oder Paketgut teleskopartig in eine im ausgefahrenen Zustand weiter aus der Gebäudeebene (bzw-. Außenflügelebene im geschlossenen Zustand) - bzw. Fenster-, Tür-, Schrägdach- oder Fassadenebene - beabstandete Position als im eingefahrenen Zustand bringbar ist, wobei die Schubrichtung der Schubvorrichtung parallel zum Außenflügel bzw.- zur Flügelebene verläuft. Derart ist die Schubvorrichtung besonders kompakt am Flügel unterbringbar und mit einfachen Mitteln realisierbar. Zudem erleichtert dies das Landen und Starten des Fluggerätes und/oder das Absetzen und Aufnehmens des Postgutes. Ein Innenflügel kann optional vorgesehen sein, ist aber nicht unbedingt zur Realisierung dieser nicht beanspruchten Ausführungsvariante erforderlich

Nach einer Weiterbildung dieser Variante kann vorteilhaft vorgesehen sein, dass der Außenflügel in eine horizontale Stellung schwenkbar ist und in dieser arretierbar ist und dass die Schubrichtung in der Horizontale verläuft. Denn derzeit werden zum Ein- und Ausfahren der Schubvorrichtung nur wenig Kraft und Energie benötigt.

Es kann dann als Schubvorrichtung beispielsweise lediglich eine Teleskopschienenführung mit mehreren teleskopierbaren Schienen zwischen dem Landebereich und/oder dem Aufnahmeelement und dem Außenflügel vorgesehen sein.

Zudem kann vorteilhaft vorgesehen sein, dass die Schubvorrichtung einen Antrieb, insbesondere einen elektromotorischen Antrieb, aufweist.

Nachfolgend werden Ausführungsbeispiele näher erläutert, wobei auch weitere Vorteile deutlich werden. Es sei betont, dass die nachfolgend diskutierten Ausführungsbeispiele die Erfindung nicht abschließend beschreiben sollen, sondern dass auch nicht dargestellte Varianten und Äquivalente realisierbar sind, sofern sie unter die Ansprüche fallen. Es zeigt:
- Figur 1:: eine räumliche Ansicht eines Gebäudes mit einem nicht beanspruchten Fassadenelement, das von einer Drohne angeflogen wird;
- Figur 2:: eine räumliche Darstellung eines Fassadenausschnittes des Gebäudes aus Fig. 1 mit einem nicht beanspruchten Fassadenelement in geschlossenem Zustand;
- Figur 3:: eine räumliche Darstellung des Fassadenausschnittes aus Fig. 2 mit dem nicht banspruchten Fassadenelement in geöffnetem Zustand;
- Figur 4:: eine räumliche Darstellung des Fassadenausschnittes aus Fig. 2 mit einer Ausführungsvariante des Fassadenelements aus Fig. 3 mit einer landenden Drohne;
- Figur 5:: die Ausführungsvariante des Fassadenelementes aus Fig. 4, bei der die abgesetzte Sendung durch die Vorrichtung in Richtung Gebäudeinneres gefördert wird;
- Figur 6:: eine Seitenansicht eines erfindungsgemäßen Fensterelementes für einen vertikalen Einbau in eine Gebäudewand;
- Figur 7:: eine Seitenansicht eines nicht erfindungsgemäßen Schrägdachelementes für einen geneigten Einbau im Gebäude -z.B. in einer zur Horizontalen schräg geneigten Schrägdachfläche;
- Figur 8:: eine Seitenansicht einer Ausführungsvariante des Schrägdachfensterelementes aus Fig. 7 mit geöffnetem Flügel;
- Figur 9:: eine Seitenansicht des Schrägdachfensterelementes aus Fig. 8 mit geschlossenem Flügel;
- Figur 10:: eine Ausführungsvariante eines nicht erfindungsgemäßen Fassadenelementes, ähnlich zu Fig. 4;
- Figur 11:: eine weitere Ausführungsvariante eines Fassadenelementes ähnlich zu Fig. 4;
- Figur 12:: eine Schnittdarstellung eines Abschnitts einer Variante eines erfindungsgemäßen Fensterelementes;
- Figur 13:: eine Schnittdarstellung eines Abschnitts einer anderen Variante eines erfindungsgemäßen Fensterelementes aus Fig. 12;
- Figur 14:: eine räumliche Ansicht einer weiteren Variante eines erfindungsgemäßen Fensterelementes zum Einbau in eine Gebäudeöffnung mit einem aufgedrehten Innenflügel;
- Figur 15:: eine Seitenansicht des Fensterelementes aus Fig. 14 mit einem aufgedrehten Innenflügel und einem aufgeschwenkten Außenflügel;
- Figur 16:: eine räumliche Ansicht eines weiteren erfindungsgemäßen Fensterelementes zum Einbau in eine Gebäudeöffnung mit einem aufgedrehten Innenflügel;
- Figur 17:: eine Seitenansicht des Fensterelementes aus Fig. 16 in einem anderen Öffnungszustand mit einem aufgedrehten Innenflügel und einem aufgeschwenkten Außenflügel;
- Figur 18:: eine räumliche Ansicht des erfindungsgemäßen Fensterelementes aus Fig. 17 mit einem aufgeschwenkten Außenflügel mit einer teleskopartig ausfahrbaren Landeplattform am aufgeschwenkten Außenflügel;
- Figur 19:: eine Vorderansicht des Fensterelementes aus Fig. 18 geöffnetem Innen- und geschlossenen Außenflügel;
- Figur 20:: eine räumliche Ansicht einer Anordnung eines erfindungsgemäßen Fensterelementes z.B. nach Art der Fig. 16 in einem Abschnitt einer Fassade;

Begriffe wie "oben", "unten", "rechts", "links", "innen" oder "außen" beziehen sich auf die jeweilige dargestellte Position in den Figuren und sind bei Bewegungen - insbesondere Drehungen - der dargestellten Elemente im Raum relativ zu verstehen bzw. zu betrachten.

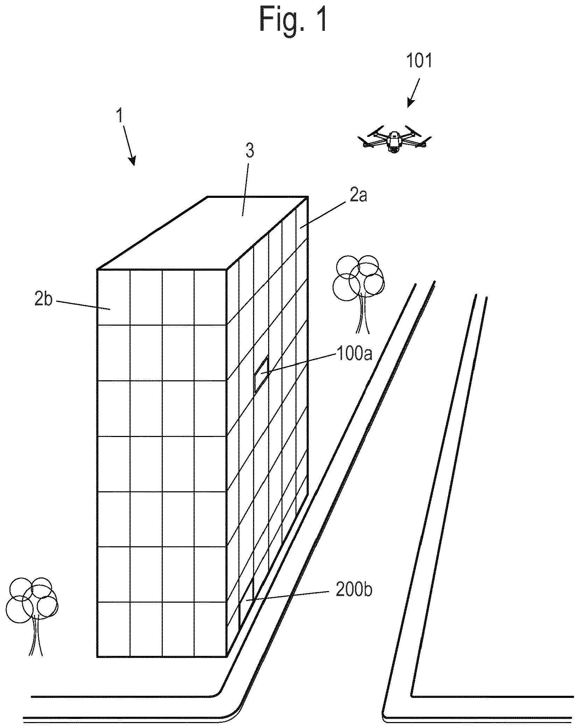

In Fig. 1 ist ein Gebäude 1 dargestellt. Das Gebäude 1 weist hier einen rechteckigen Grundriss auf.

Das Gebäude 1 weist hier beispielhaft sechs Stockwerke plus Erdgeschoss auf. Das Gebäude 1 kann auch mehr oder weniger Stockwerke aufweisen. Das Gebäude 1 weist ein Dach auf, das hier beispielhaft als ein Flachdach ausgeführt ist. Das Gebäude 1 kann auch ein Schrägdach 3 mit geneigten Schrägdachflächen, wie z.B. ein Sattel- oder Pultdach aufweisen.

Das Gebäude 1 kann auch einen geometrisch anderen Grundriss aufweisen. Die in Fig. 1 sichtbaren Fassaden des Gebäudes sind hier jeweils als Elementfassaden ausgeführt. Sie bestehen insofern aus einer Vielzahl von Fassadenelementen 2a, 2b. Diese sind hier rechteckig ausgeführt und in Reihen übereinander sowie in Spalten nebeneinander angeordnet.

Ein Teil der Fassadenelemente 2a, 2b können an ihrer Außenseite wenigstens eine Platte aufweisen. Diese Platte kann wiederum bei einem Teil oder sämtlichen der Fassadenelemente 2a, 2b als eine Glasplatte ausgebildet sein, z.B als eine Isolierglasplatte.

Wenigstens eines oder mehrere - hier zwei der Fassadenelemente 100a, 200b weisen hier jeweils eine Vorrichtung (hier nicht dargestellt) zum Versand oder zum Empfang von Brief- und Paketstückgut auf, wobei die Vorrichtung dazu ausgelegt ist, dass das Brief- und Paketstückgut von einem unbemannten Luftfahrzeug abholbar oder zustellbar ist (kurz "Vorrichtung zum Empfang und Versand von Paketstückgut mit einem unbemannten Fluggerät").

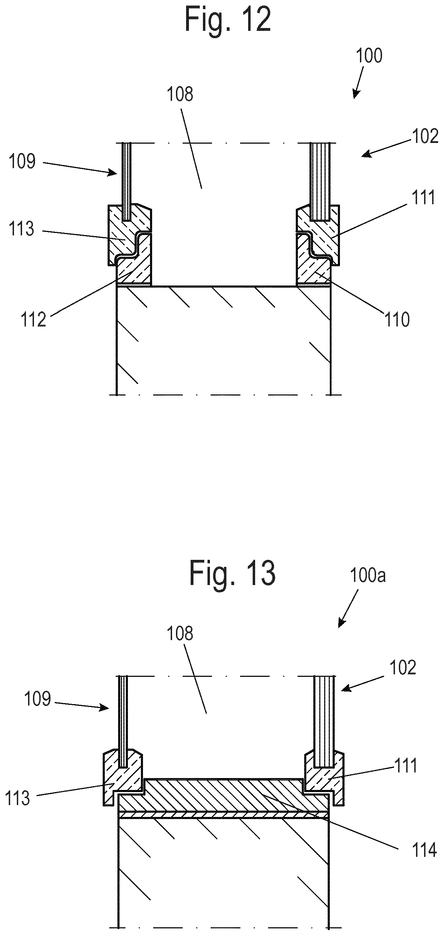

Diese Fassadenelemente sind dazu vorzugsweise mit einem um eine horizontale Kippachse schwenkbaren Außenflügel 102 ausgestattet und einem öffenbaren Innenflügel. Ein beispielhafter Aufbau wird weiter unten unter Bezug auf die Fig. 12 ff erläutert.

Die Fassadenelemente 100a, 200b sind mit einem öffenbaren und verschließbaren Außenflügel 102, der eine "Vorrichtung 103 zum Empfang und Versand von Paketstückgut mit einem unbemannten Fluggerät" aufweist. Diese Fassadenelemente 100a, 200b können an nahezu beliebiger Stelle der Fassade des Gebäudes eingebaut sein und ersetzen ein an sich sonst an dieser Stelle vorgesehenes Fassadenelement ohne eine Vorrichtung zum Empfang oder Versand eines Postgutes mit einem unbemannten Fluggerät, wobei die Vorrichtung dazu ausgelegt ist, dass das Postgut von einem unbemannten Luftfahrzeug abholbar oder zustellbar ist.

Dabei ist als besonders vorteilhafte Ausgestaltung vorgesehen, dass sich die Fassadenelemente ohne Vorrichtung zum Empfang und Versand von Postgut mit einem unbemannten Fluggerät nicht oder im Wesentlichen nicht von den Fassadenelementen 100a, 200b mit einem Außenflügel 102 mit einer Vorrichtung zum Empfang und Versand von Postgut mit einem unbemannten Fluggerät unterscheiden lassen.

Geschaffen wird derart eine Fassade mit mehrere Fassadenelementen 2a, 2b; 100a, 200b, von denen ein Teil der Fassadenelemente 2a, 2b ohne Vorrichtung zum Empfang und Versand von Postgut mit einem unbemannten Fluggerät ausgebildet ist oder sind und wobei wenigstens eines der Fassadenelemente 100a, 200b, mit einer Vorrichtung zum Empfang und Versand von Postgut mit einem unbemannten Fluggerät ausgebildet ist, wobei die Optik dieser verschiedenen Fassadenelemente von au-ßen betrachtet gleich oder im Wesentlichen gleich ist.

Dazu weist der aufschwenkbare Außenflügel 102 mit der Vorrichtung 103 zum Empfang und Versand von Postgut mit einem unbemannten Fluggerät beispielsweise die gleichen Flächenabmessungen wie die sonstigen Fassadenelemente ohne Vorrichtung zum Empfang und Versand von Postgut mit einem unbemannten Fluggerät. Zudem kann vorteilhaft vorgesehen sein, dass aufschwenkbare Außenflügel mit einer Vorrichtung zum Empfang und Versand von Postgut mit einem unbemannten Fluggerät beispielsweise die gleiche Außen-Flächenplatte aufweist, die zur Gebäudeaußenseite gerichtet ist, wie die sonstigen Fassadenelemente ohne Vorrichtung zum Empfang und Versand von Postgut mit einem unbemannten Fluggerät.

Vorzugsweise weisen die Fassadenelemente 100a, 200b mit der Vorrichtung 103 zum Empfang und Versand von Paketstückgut mit einem unbemannten Fluggerät jeweils einen öffenbaren und verschließbaren Innenflügel 109 und einen öffenbaren und verschließbaren Außenflügel 102 auf, wobei diese vorzugsweise als Schwenk-, Schiebe oder Drehflügel ausgebildet sind.

Besonders bevorzugt wird die Ausbildung jedenfalls des Außenflügels 102 als Schwenkflügel mit einer horizontal ausgerichteten Schwenkachse, da es eine solche Schwenkachse leichtesten ermöglicht, eine horizontal ausgerichtete Landestation 104 für die Drohne 101 und/oder eine Aufnahmestation 106 zum Absetzen und/oder Aufnehmen des Postgutes durch eine Drohne 101 auszubilden.

Ab einer bestimmten Gebäudehöhe können Drohnen 101 die einzelnen Fenster-, Tür- oder Fassadenelemente anfliegen, ohne dabei Personen, die sich vor oder in der Nähe der Gebäude 1 befinden, zu gefährden. Fenster-, Tür- oder Fassadenelemente - wie hier das zweite Fenster-, Tür- oder Fassadenelement 200b in Bodennähe können dagegen zwar theoretisch auch angeflogen werden, zumindest aber - wenn dies nicht erlaubt ist - z.B. durch autonome Fahrzeuge am Boden angefahren werden .

Nachfolgend wird nur das Fassadenelement 100a näher beschrieben. Das Fassadenelement 200b in Bodennähe kann gleich dazu aufgebaut sein.

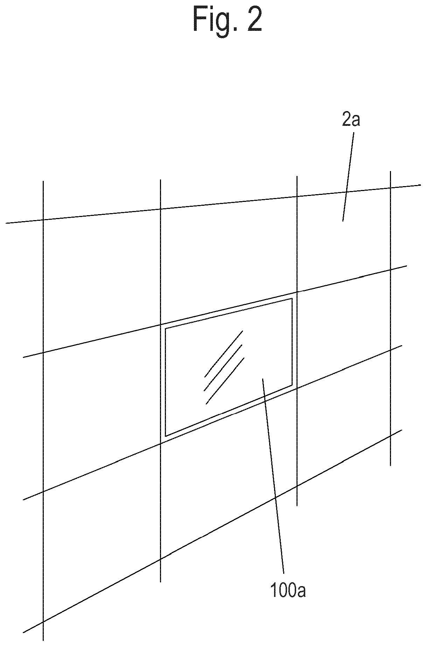

In Fig. 2 ist ein Ausschnitt der Fassade 2 des Gebäudes 1 aus Fig. 1 räumlich dargestellt. Der Ausschnitt der Fassade 2 weist das Fassadenelement 100a mit der Vorrichtung zum Empfang und Versand von Postgut mit einem unbemannten Fluggerät auf. Dieses Fassadenelement 100a ist hier im Wesentlichen in einer Ebene zur Fassadenaußenfläche des Gebäudes 1 angeordnet und erfüllt damit höchste ästhetische Anforderungen. Vorteilhafterweise hebt sich das Fassadenelement 100a mit der Vorrichtung 103 nicht von anderen Elementen wie den anderen Fassadenelementen oder vielleicht sogar Fenster oder Türen des Gebäudes 1 ohne eine Vorrichtung 103 ab, weist also eine gleiche Optik auf (hier zum Beispiel eine Glasfläche in einer Glasfassade).

Bevorzugt ist das Fassadenelement 100a mit der Vorrichtung 103 zum Empfang und Versand von Postgut mit einem unbemannten Fluggerät zur Außenseite und/oder zur Innenseite des Gebäudes 1 hin im Wesentlichen bündig mit der übrigen Fassade ausgebildet.

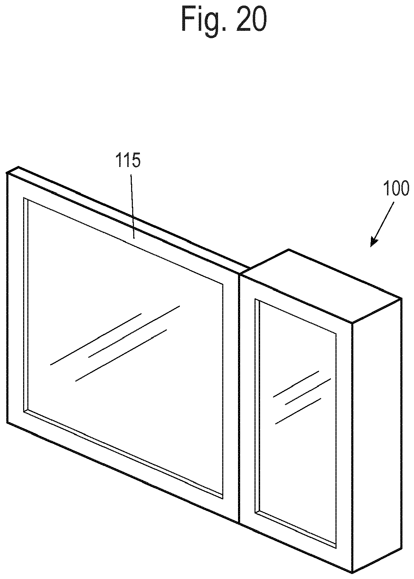

Das Fassadenelement 100a mit der Vorrichtung 103 zum Empfang und Versand von Postgut mit einem unbemannten Fluggerät kann allein ein in eine Gebäudeöffnung einsetzbare Einheit bilden oder einen Teil einer übergeordneten Subeinheit der Fassade bilden, zu der beispielsweise noch ein Fenster 115 oder dgl. gehören kann (Fig. 20).

Das oder die Fassadenelement(e) 100a mit der Vorrichtung zum Empfang und Versand von Postgut mit einem unbemannten Fluggerät kann/ können an einer beliebiger Stelle des Gebäudes 1 angeordnet werden, so zum Beispiel an einzelnen Wohneinheiten bzw. Büros oder in Treppenhäusern, so dass hier der Zugang von mehreren zugangsberechtigten Personen möglich ist.

Der Außenflügel 102 des Fassadenelementes100a mit der Vorrichtung zum Empfang und Versand von Postgut mit einem unbemannten Fluggerät ist bevorzugt mit einer Schwenkmechanik zum Schwenken um eine horizontale Schwenkachse versehen.

Der Außenflügel 102 des Fassadenelementes100a mit der Vorrichtung zum Empfang und Versand von Postgut mit einem unbemannten Fluggerät kann nach einer vorteilhaften Ausgestaltung einen wärmegedämmten Rahmen mit Dichtungen aufweisen, der ein Flächenelement, wie beispielsweise eine Glasplatte bzw. Verglasung aufnimmt.

Der Außenflügel 102 des Fassadenelementes100a mit der Vorrichtung zum Empfang und Versand von Postgut mit einem unbemannten Fluggerät kann ferner Beschlagteile, wie beispielsweise Drehbänder, Ausstellscheren und Verriegelungselemente aufweisen. Derartige Beschlagteile sind an sich bekannt, so dass auf eine detaillierte Beschreibung verzichtet wird. Es sei an dieser Stelle deshalb beispielhaft auf die folgende Patentliteratur verwiesen: US 3,722,142; US 2,648,878; EP 3 006 658; EP 1 348 830; EP 1 739 263.

Darüber hinaus können zur Betätigung des Außenflügels 102 motorische Antriebe zum Einsatz kommen. Hierzu gehören beispielsweise Kettenantriebe oder Antriebe, die direkt oder indirekt auf die Ausstellscheren wirken. Realisiert werden dabei in Bezug auf das Fenster-, Tür- oder Fassadenelement 100a bevorzugt die folgenden Öffnungskinematiken: Kippflügel-(Horizontalachsen-Drehbänder unten), Klappflügel-(Horizontalachsen-Drehbänder oben) oder Senkklappflügel-Fenster (zum Beispiel mit Drehfunktionen in den Ausstellscheren).

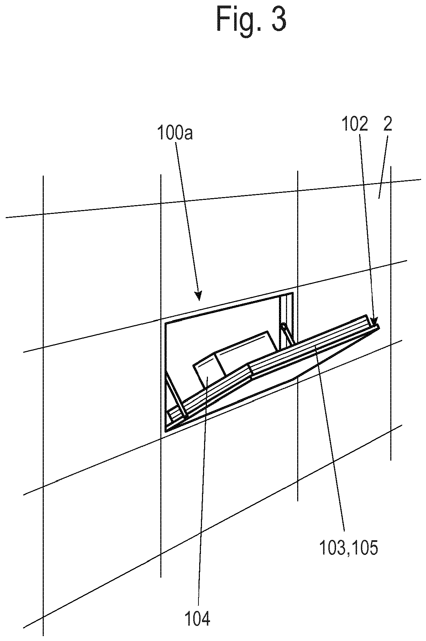

In Fig. 3 ist das Fassadenelement 100a teilgeöffnet dargestellt.

Das Fassadenelement 100a der Fig. 3 weist auf einer Innenseite des Außenflügels 102 die Vorrichtung 103 zum Empfang und Versand von Postgut mit einem unbemannten Fluggerät auf. Diese Vorrichtung 103 kann mit einem Landebereich 104 für eine Drohne 101 (hier nicht dargestellt) versehen sein. Die Vorrichtung 103 kann auch ohne den Landebereich 104 ausgeführt sein. Sie muss dann stattdessen einen Absetz- und Aufnahmebereich für das Postgut aufweisen. Dieser kann dann von der Fläche her kleiner ausgebildet sein als ein Landebereich aber ansonsten analog aufgebaut sein; in diesem Fall würde die Drohne 101 das Transportgut auf dem Außenflügel absetzen oder es auf diesen aus geringer Höhe abwerfen.

Zur sicheren Abgabe des Transportgutes wird aber ein Landen der Drohne 101 auf dem Landebereich 104 der Vorrichtung 103 bevorzugt. Darüber hinaus hat das Landen der Drohne 101 auf dem Landebereich 104 den Vorteil, dass die Drohne 101 das Transportgut nicht nur abgeben, sondern das Transportgut auch besonders einfach aufnehmen kann. Dadurch steht das Fassadenelement 100a nicht nur dafür zur Verfügung, um das Transportgut zu empfangen, sondern auch, um das Transportgut zu versenden.

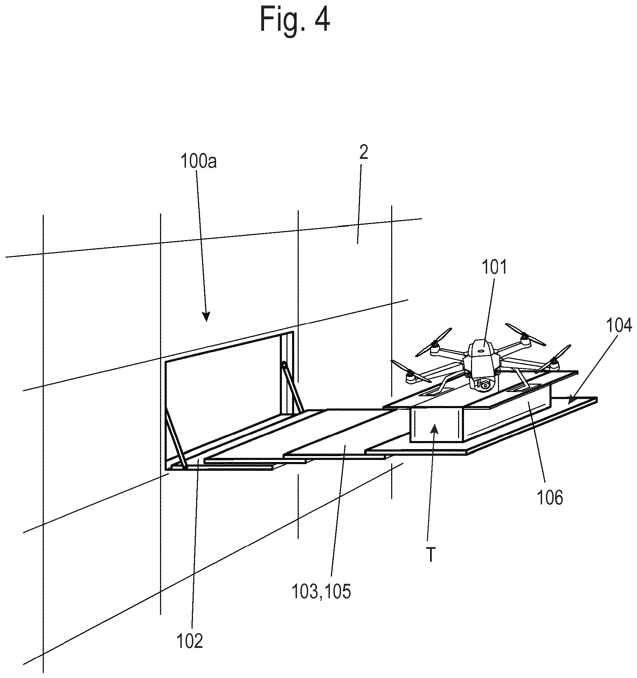

In Fig. 4 ist das Fassadenelement 100a in einem vollgeöffneten Zustand dargestellt. Ferner ist die Vorrichtung 103 zur Aufnahme eines Transportgutes T in einem maximal geöffneten Zustand dargestellt. Das Transportgut T wird gerade von einer Drohne 101 geliefert oder abgeholt.

Die Vorrichtung 103 kann nach einer vorteilhaften Ausgestaltung eine teleskopierbare Schubvorrichtung 105 aufweisen, die es ermöglicht, den Landebereich 104 ein Stück beabstandet vom Gebäude 1 bzw. beabstandet zu der Fassade 2 zu positionieren, als dies bei einem reinen Schwenkflügel ohne teleskopierbare Schubvorrichtung 105 möglich wäre.

Dabei kann nach einer vorteilhaften Variante dieser Ausgestaltung vorgesehen sein, dass die Schubrichtung der Schubvorrichtung parallel zu dem Außenflügel 102 verläuft. Denn derart kann einerseits die Schubvorrichtung besonders einfach an dem Schwenkflügel angeordnet werden. Zudem ist zum Ein- und Ausfahren der Schubvorrichtung 105 insbesondere in der Horizontalen nur eine relativ geringe Kraft erforderlich, so dass es möglich ist, mit einem einfachen elektromotorischen Antrieb eine automatisch ein- und ausfahrbare Schubvorrichtung (zu realisieren). Der Antrieb ist hier nicht dargestellt. Ebenfalls nicht dargestellt ist eine optionale Steuervorrichtung, mit der der Betrieb der Vorrichtung 103. bzw. des gesamten Elementes in Abhängigkeit von den Flugbewegungen zum Zustellen und Abholen von Sendungen gesteuert wird (z.B. das Aufklappen und Einklappen des Außenflügels 102 und das Aus- und Einfahren der Schubvorrichtung 105).

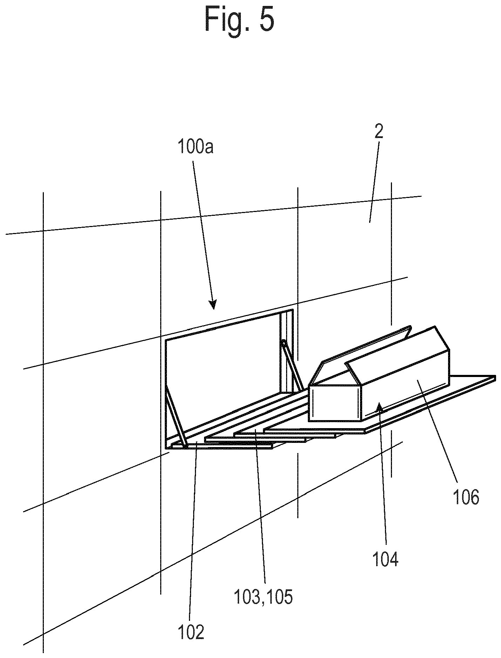

Es kann als Schubvorrichtung 105 wenigstens eine Art Teleskopschienenführung mit mehreren teleskopierbaren Schienen zwischen der Schubvorrichtung 105 und dem Außenflügel vorgesehen sein (in Fig. 5 nicht dargestellt). Nach einer anderen Variante weist die Schubvorrichtung 105 mehrere verschieblich zueinander teleskopartig ausfahrbare Platten auf. Die Schubvorrichtung ist auf verschiedene Weise realisierbar.

Hierdurch wird erreicht, dass die Drohne 101 nicht zu nahe an das Gebäude 1 heranfliegen muss sondern ein Stück dazu beabstandet sicher manövrieren und landen kann. Dadurch wird ein sicheres Landen und Starten mit verringerter Kollisionsgefahr der Drohne 101 mit dem Gebäude 1 gewährleistet. Die Schubvorrichtung 105 kann beispielsweise aus zusätzlichen Wärmedämmplatten herstellt sein, die mit aus dem Stand der Technik bekannte Führungen versehen sein können. Diese können beispielsweise wie Schubkastenführungen für Möbel ausgebildet sein und sind vorzugsweise elektromotorisch verfahrbar ausgestaltet.

Der Landebereich 104 kann als ein gesondertes, stationäres Aufnahmeelement 106 für das Transportgut ausgebildet sein. Das Aufnahmeelement 106 kann als eine Art Schale ausgebildet sein, als ein offener Kasten oder als ein verschließbares Behältnis (siehe Fig. 3 bis Fig. 5). Der Kasten kann ein oder zwei Klappdeckel aufweisen, die nach Bedarf elektromotorisch geöffnet oder geschlossen werden können. Dabei können die Deckelflächen zusätzliche Landeflächen für die Drohne 101 ausbilden.

In Fig. 5 ist die Schubvorrichtung 105 in einer Mittelstellung - also zwischen voll ausgefahren (siehe Fig. 4) und voll eingefahren (siehe Fig. 3) - dargestellt. Das Aufnahmeelement 106 ist teilgeöffnet dargestellt. Insofern wird die Vorrichtung 103 in Fig. 5 entweder für einen Landeanflug der Drohne 101 (hier nicht dargestellt, siehe Fig. 4) vorbereitet oder die Drohne 101 ist gerade gestartet und die Vorrichtung 103 wird für das Schließen des Fassadenelementes 100 vorbereitet.

Bei einer anderen - etwas einfacher aufgebauten aber auch weniger vielseitigen - Ausführungsvariante weist das Fassadenelement 100a als Außenflügel 102 einen Klappflügel auf, auf dem die Drohne 101 direkt landen kann. Der Au-ßenflügel 102 des Fassadenelementes 100a kann dann eine Öffnung aufweisen, die es erlaubt, das Transportgut T direkt durch den Außenflügel 102 hindurch in das Aufnahmeelement 106 zu platzieren.

Der Außenflügel 102 kann aber auch eine Schubvorrichtung 105 mit Landebereich 104 und/oder Aufnahmenelement 106 aufweisen. Das Ausfahren soll durch den Pfeil dargestellt werden.

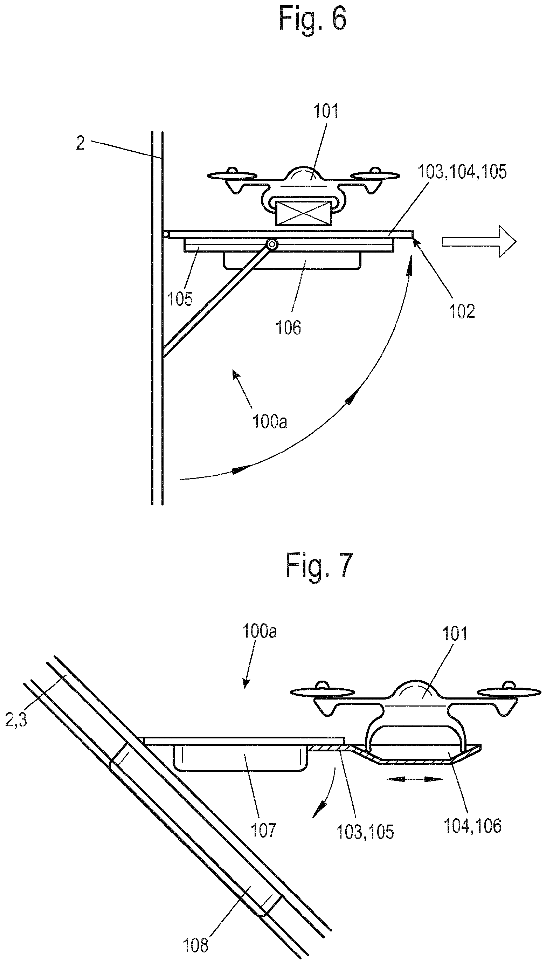

In Fig. 7 bis 9 sind nicht beanspruchte Ausführungsformen dargestellt, wobei ein Schrägdachfenster(element) 100 zum Öffnen und Verschließen einer Schrägdachöffnung eines Schrägdaches - d.h. insbesondere eines Schrägdachs mit einem Neigungswinkel zwischen 10° und 80° zur Horizontalen - mit einem Außenflügel 102 versehen ist, der eine Vorrichtung 103 zum Empfang und Versand von Postgut mit einem unbemannten Fluggerät aufweist.

Auch diese Vorrichtung 103 zum Empfang und Versand von Postgut mit einem unbemannten Fluggerät weisen vorzugsweise wiederum die bzw. eine teleskopierbare Schubvorrichtung 105 mit einem Landebereich 104 und/oder einem Aufnahmeelement 106 auf, mit der der Landebereich 104 bzw. das Aufnahmeelement 106 teleskopartig in Richtung des Pfeils aus der Gebäude- bzw. Fassadenebene herausbringbar ist, um eine beabstandete Position zu schaffen. Hierdurch kann der Außenflügel 102 des Schrägdachfensterelementes 100a ohne eigene Öffnung auskommen, was die Dichtigkeit des Schrägdachfensterelementes 100a verbessert.

Dabei weisen die nicht beanspruchten Ausführungsvarianten in den Figuren 7, 8 und 9 jeweils einen geschlossenen Außenflügel 102 ohne direkte Öffnung für das Transportgut auf. Dadurch entfällt die Öffnung direkt im Außenflügel 102. Ferner weist der jeweils Au-ßenflügel 102 des jeweiligen Fenster-, Tür-, Schrägdach- oder Fassadenelementes 100a umlaufende Dichtungen (hier nicht dargestellt) analog zu einem Fensterflügel ohne Vorrichtung 103 auf.

Zudem ist wiederum ein Landebereich 104 vorgesehen. Dieser kann wiederum an einer teleskopierbaren Schubvorrichtung 105 vorgesehen sein. Der Landebereich104 kann als eine Landeplattform oder als ein Landegestell ausgebildet sein. Der Landebereich 104 kann zudem - um Dichtigkeitsprobleme zu vermeiden und ihn gut gegen Witterungseinflüsse dauerhaft zu schützen - an der (bezogen auf den aufgeklappten Zustand) Unterseite des Außenflügels 102 ausfahrbar vorgesehen sein.

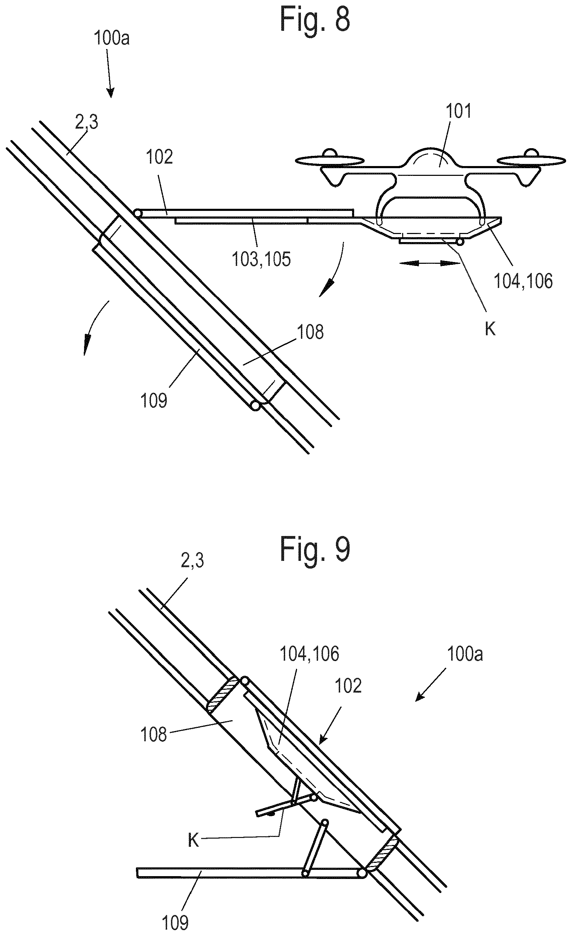

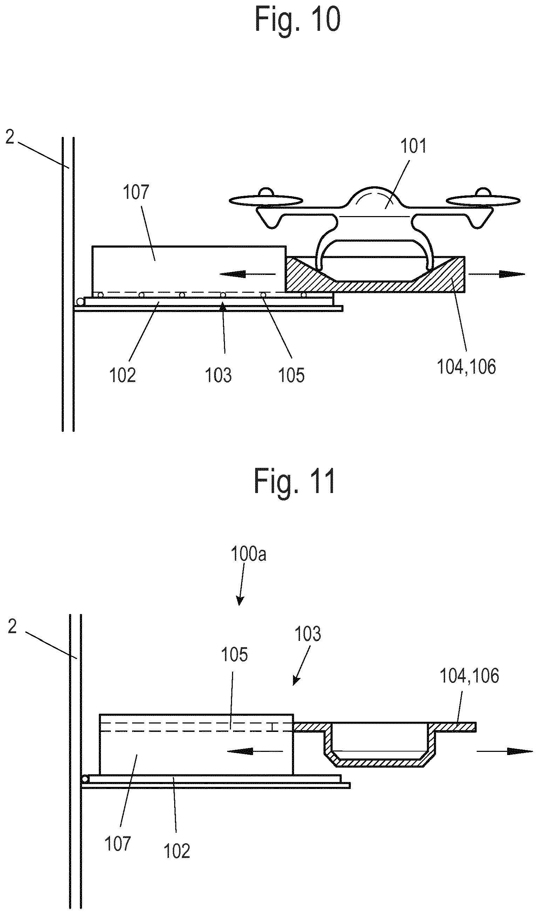

Die kann wie eine Art Schubkasten ausgebildet sein, der vorzugsweise unterhalb des Außenflügels verschieblich angeordnet ist und in einer Horizontalstellung des Außenflügel aus diesem ausfahrbar ist (Fig. 7, 8). Analoges kann an einem Fensterelement oder einem Fassadenelement verwirklicht werden (Fig. 10, Fig. 11). Denkbar ist es auch, anstelle einer Schubvorrichtung ein Schwenkelement vorzusehen, um den Landebereich auszuklappen. Die Mechanik zum Ausfahren des Landebereiches kann auch zum Ausführen einer kombinierten bzw. überlagerten Linear- und Schwenkbewegung ausgebildet sein.

Der jeweilige Landebereich 104 kann ein jeweils an unterschiedliche Landegestelle der eingesetzten Drohne 101 angepasstes Aufnahmeelement 106 aufweisen, das beispielsweise als eine Art Vertiefung in dem Landebereich 104 ausgebildet sein kann. Darüber hinaus weist die jeweilige Vorrichtung 103 jeweils eine teleskopierbare Schubvorrichtung 105 auf. Die Schubvorrichtung 105 kann eine Gleitführung (siehe Fig. 11) oder eine Wälzführung (siehe Fig. 10) aufweisen.

In Fig. 7 und Fig. 10 weist die Innenseite des Außenflügels 102 jeweils ein Gehäuse 107 zur Aufnahme der Vorrichtung 103, insbesondere des Landebereichs 104 und der Schubvorrichtung 105, auf. Derart werden diese Komponenten im eingefahrenen Zustand bzw. im geschlossenen Zustand des Außenflügels 102 gut geschützt untergebracht. Dieses Gehäuse kann eine Klappe K (Fig. 9) aufweisen, die es ermöglicht, in das Gehäuse ein Postgut einzulegen und/oder es von dort zu entnehmen. Diese Klappe K kann im Sinne der Anmeldung bereits als Innenflügel angesehen werden. Es ist aber auch denkbar, zusätzlich an dem Schrägdach einen weiteren Innenflügel vorzusehen.

In den bevorzugten Ausführungsvarianten des Fenster- oder Türelementes 100a - beispielhaft zunächst gezeigt an dem nicht erfindungsgemäßen Schrägdachelement 100a für das Schrägdach nach Fig. 7, 8 und 9 - kann das jeweilige Fenster-, Tür-, Schrägdach- oder Fassadenelement 100a jeweils einen Zwischenraum 108 zur Aufnahme des Gehäuses 107 und / oder des Landebereichs 104 und / oder der Schubvorrichtung 105 und / oder des Aufnahmeelementes 106 (hier nicht dargestellt) - also im Wesentlichen der Vorrichtung 103 - aufweisen.

Zudem kann der Zwischenraum 108 zur Zwischenlagerung des Postgutes ausgelegt sein und dienen. Der Zwischenraum 108 kann auch das Gehäuse 107 aufnehmen. Der Zwischenraum 108 weist neben dem Außenflügel 102 einen Innenflügel 109 auf. Der Innenflügel 109 weist -analog zum Außenflügel 102- die Eigenschaften eines Fensterflügels auf, der zur Entnahme und/oder zum Einstellen des Transportgutes im Gebäude 1 zu öffnen ist.

Dadurch wird eine Art Schleuse gebildet. Diese kann derart ausgelegt sein, dass in vorteilhafter Weise in Abhängigkeit vom Anflug oder Starts der Drohne 101 nur der Außenflügel 102 oder nur der Innenflügel 109 des Fenster-, Tür-, Schrägdach- oder Fassadenelementes 100 geöffnet sein kann. Zumindest ermöglicht es die Schleuse, auf einfache Weise zu erreichen, dass jeweils nur ein geringer Teil Wärme das Gebäude 1 während des Anflugs oder des Starts der Drohne 101 verlässt bzw. erreicht, wodurch das Fenster-, Tür-, Schrägdach- oder Fassadenelement 100a insgesamt gute Wärmedämmeigenschaften aufweisen kann, die auch erhöhten Standards bis hin zu einem Passivhausstandard genügen können.

Der Innenflügel 109 kann ebenfalls bevorzugt mit der Innenwand des Gebäudes 1 oder der Innenseite der Fassade 2 bündig abschließen. Dadurch hat das Fenster- oder Türelement 100a im Wesentlichen die gleiche Bautiefe, wie die Außenhülle des Gebäudes 1 bzw. die Wand des Gebäudes 1. Der Vorteil dieses Innenflügels 109 liegt darin, dass bei Anflug der Drohne101, wenn sich der Außenflügel 102 öffnet, der Innenraum des Gebäudes 1 weiterhin gegen Außeneinflüsse, gesichert ist.

Dabei braucht der Innenflügel 109 nicht die hohen Anforderungen an Wärmedämmeigenschaften, Dichtigkeit und Einbruchhemmung aufzuweisen, wie der Außenflügel 102, da der Innenflügel 109 für den Übergabevorgang des Transportgutes nur kurzzeitig geöffnet ist. Um eine erhöhte Einbruchhemmung des Fenster-, Tür-, Schrägdach- oder Fassadenelementes 100a zu gewährleisten, kann es aber vorteilhaft sein, den Innenflügel 109 einbruchshemmend zu gestalten, da der Außenflügel 102 durch die Steuerung der Drohne 101 -in missbräuchlicher Absicht- manipulierbar sein könnte. Hierdurch ergibt sich besonders vorteilhaft eine erhöhte Einbruchhemmung des Fenster-, Tür-, Schrägdach- oder Fassadenelementes 100a.

Der Innenflügel 109 und/oder der Außenflügel 102 weisen vorzugsweise jeweils einen Flügelrahmen 113, 111 auf. Dieser jeweilige Flügelrahmen 113, 111 umfasst bzw. umrahmt vorzugsweise jeweils ein Flächenelement. Dieses Flächenelement kann als eine Platte ausgebildet sein, insbesondere als Glas-, Kunststoff- oder Metallplatte.

In Fig. 12 ist eine bevorzugte Ausführungsvariante eines Zwischenraums 108 dargestellt.

Auf der rechten Seite der Fig. 12 -hier die Gebäudeaußenseite- befindet sich ein äu-ßeres Fensterelement mit einem im Schnitt dargestellten unteren Rahmenholm eines Blendrahmens 110 und einem Flügelrahmenholm des Flügelrahmens 111 des beweglichen, Außenflügels 102. Der Außenflügel 102 lässt sich durch einen hier nicht dargestellten Beschlag, beispielsweise als Kippflügel, nach außen -also in der jeweiligen Fig. 12 oder 13 nach rechts- öffnen. In dem Flügelrahmen 111 ist hier eine Isolierglasscheibe angeordnet.

Auf der linken Seite der Fig. 12 -also zum Innenraum des Gebäudes 1 hin gerichtetbefindet sich ebenfalls in bündiger Anordnung ein Blendrahmen 112, der mit dem Mauerwerk fest verbunden ist, und der darin angeordneter beweglicher innerer Flügelrahmen 113 des Innenflügel 109. Der Flügelrahmen 113 kann dabei z.B. eine opake Füllungsplatte aufnehmen. Es kann ausreichend sein, den Innenflügel 109 in einfacher Bauweise zu gestalten. Vorzugsweise kann der Innenflügel 109 als Dreh- oder Dreh-Kipp Flügel ausgebildet werden.

Zwischen dem Flügelrahmen 111 und dem Blendrahmen 110 befindet sich wenigstens eine Ebene mit einer Dichtung (hier nicht dargestellt). Bevorzugt werden für die Rahmen 110, 111 Rahmenprofile, insbesondere in wärmegedämmter Bauart verwendet. Das Grundmaterial des Rahmens 111, 110 kann ein Metall wie Stahl oder Aluminium sein aber auch Holz oder Kunststoff. Es sind zudem Mischformen einsetzbar, bei denen die Innen- und der Außenrahmen aus verschiedenen Materialen bestehen. Es sind auch je Rahmen mehrere verschiedene Materialien wie Holz und Kunststoff oder dgl. einsetzbar.

Wie in Fig. 13 dargestellt ist, kann anstelle zweier Blendrahmen 110, 112 für das erfindungsgemäße Fensterelement 100a auch ein einziger zwischen den beiden Ebenen "Innenflügel" und "Außenflügel" angeordneter und zwischen diesen Ebenen durchgehender Blendrahmen 114 mit doppeltem Anschlag für den Innenflügel und den Außenflügel verwendet werden.

Vorzugsweise sind einer, mehrere oder sämtliche der Blend- und Flügelrahmen in wärmegedämmter Ausführung ausgeführt. Dies bedeutet, dass bei einer Verwendung von Aluminium vorzugsweise von innen nach außen an dem jeweiligen Rahmen ein mehrschichtiger Aufbau mit einem oder mehreren Aluminiumprofilen und wenigstens einer dazwischen angeordneten Isolierprofilebene aus Isolierprofilen - insbesondere aus Kunststoff - realisiert wird.

In Fig. 12 und 13 ist jeweils unterhalb des bzw. der Blendrahmen 110, 112 gestrichelt eine Art Mauerwerk dargestellt, wobei dieses eine Maueröffnung bzw. eine Gebäudeöffnung begrenzt. Hier kann sich aber in einer Richtung oder rundum um den Rahmen auch ein anderes Fassadenelement anschließen, beispielsweise ein weiteres Element einer Fassade, die als Riegel-/Pfostenkonstruktion ausgebildet ist oder ein weiteres Element einer Elementfassade, deren Elemente vormontiert an der Baustelle nach Art eines Schachbrettes in Reihen und Spalten zusammengesetzt werden, wobei diese weiteren Elemente dann bevorzugt keine Vorrichtung 103 aufweisen.

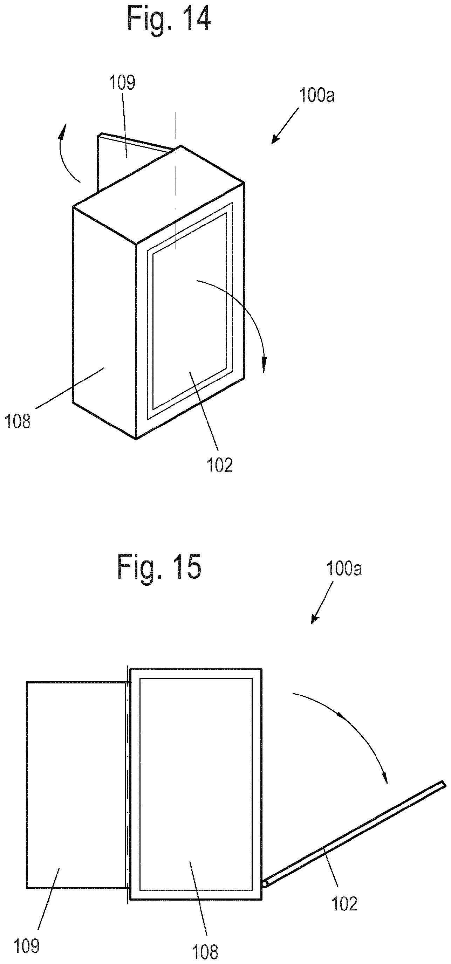

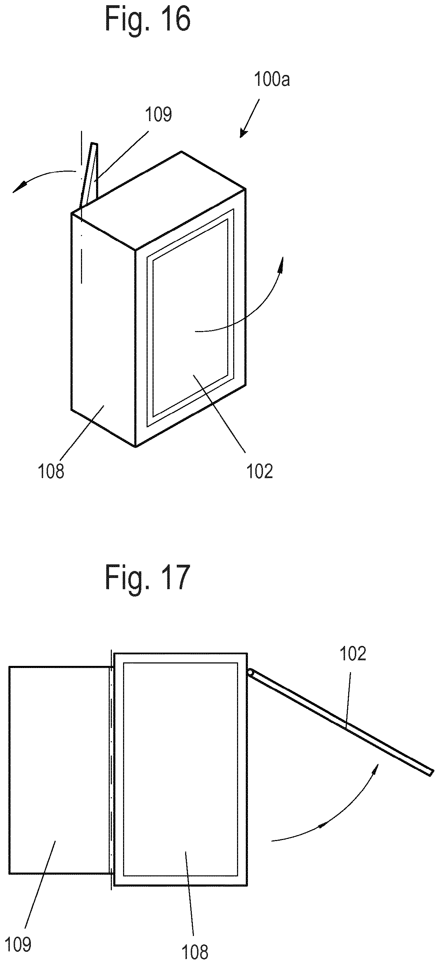

In den Figuren 14 bis 17 ist jeweils eine Ausführungsform des Fensterelementes 100a in bevorzugter Bauweise mit einem Zwischenraum 108 dargestellt. Es ist jeweils der Zwischenraum 108 mit dem Außenflügel 102 zur Gebäudeaußenseite und dem Innenflügel 109 zur Gebäudeinnenseite dargestellt. Die Darstellungen in den jeweiligen Figuren 14 bis 17 unterscheiden sich durch die jeweilige Öffnungskinematik.

Die Figuren 14 und 16 bzw. 15 und 17 zeigen jeweils in einer räumlichen Ansicht bzw. in einer Seitenansicht die bevorzugte Anordnung zur Gebäudeaußenseite mit einem um eine horizontale Drehachse beweglichen Außenflügel 102 und zur Gebäudeinnenseite mit einem um eine vertikale Drehachse beweglichen Innenflügel 109. Andere Öffnungskinematiken für das Fensterelement 100a bzw. die Flügel 102, 109 sind aber auch möglich. Hierzu gehören beispielsweise Schiebeflügel, Schwenkflügel oder faltbare Flügel. Die Flügel 102, 109 können auch mehrteilig ausgeführt sein.

Das in den Fig. 14 bis 17 dargestellt, bevorzugte Fensterelement 100a erinnert in seiner Gestaltung an ein so genanntes Kastenfenster. Das Kastenfenster oder auch Doppelfenstersysteme bestehen aus zwei im Abstand zueinander angeordneten Fensterelementen. Durch die Ausführung als Kastenfenster ergeben sich weitere Vorteile für das Fensterelement 100a.

Hierzu gehört, dass das Fensterelement 100a vorteilhaft zusätzlich als Lüftungselement verwendet werden kann. Hierdurch wird die Funktion als Empfangs- und Versandstation für Brief- und Paketsendungen nicht eingeschränkt. Das erfindungsgemäße Fensterelement 100a kann demnach zusätzlich mit Lüftungskanälen, Wärmetauschereinheiten, Luftfiltern und schalldämmenden Elementen ausgestattet werden. Hierdurch erhöht sich vorteilhaft der technische Nutzen eines derartigen Fensterelementes 100.

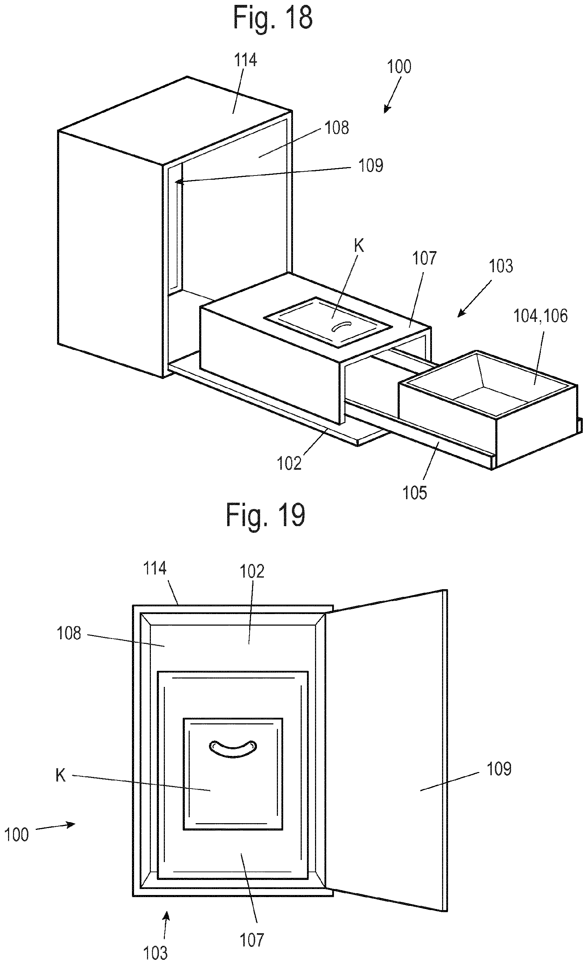

Im Folgenden wird ein weiterer bevorzugter Aufbau des erfindungsgemäßen Fensterelementes 100 anhand der Fig. 18 und der Fig. 19 beschrieben.

Der Zwischenraum 108 wird bevorzugt von einem durchgehenden Blendrahmen 114 mit doppeltem Anschlag für den Innenflügel 109 und dem Außenflügel 102 gebildet.

Dabei dreht sich der Außenflügel 102 bevorzugt um eine horizontale Achse in einer Öffnungsbewegung nach außen. Der Innenflügel 109 dreht sich in einer Öffnungsbewegung bevorzugt um eine vertikale Achse. Dies ist bevorzugt aber nicht zwingend.

Die Vorrichtung 103 ist auf der Innenseite des Außenflügels 102 angeordnet und weist vorzugsweise das Gehäuse 107 auf. Das Gehäuse 107 weist vorzugsweise eine Klappe K (siehe auch Fig. 8) oder Tür zur Entnahme oder zum Einstellen des Transportgutes auf. Die teleskopierbare Schubvorrichtung 105 ist einerseits an dem Außenflügel 102 oder an dem Gehäuse 107 angeordnet und andererseits an dem Landebereich 104. Der Landebereich 104 kann durch die Schubvorrichtung 105 in das Gehäuse 107 bewegt werden. Der Landebereich 104 kann als einfache Fläche, als trichterartige Fläche oder als Aufnahmeelement 106 ausgebildet sein.

In Fig. 19 ist das Fensterelement 100a in einer Vorderansicht aus einem Raum des Gebäudes aus gesehen dargestellt. Der Innenflügel 109 ist geöffnet, so dass in den Zwischenraum 108 des Fensterelementes 100 gesehen werden kann. Der Landebereich 104 ist in das Gehäuse 107 eingefahren und der Außenflügel 102 ist geschlossen. Zum Öffnen des Aufnahmeelementes 106 kann die Klappe K geöffnet werden, um ein Transportgut zu entnehmen oder in das Aufnahmeelementes 106 zu legen. Das hier dargestellte Fensterelement 100a weist eine besonders große Ausladung auf, d.h. dass der Landebereich 104 bei geöffneten Außenflügel 102 entsprechend weit von dem Gebäude 1 entfernt angeordnet ist. Standardfenster nach DIN EN 14351-1:2006-07, Anhang E (Fenster bis 2,3 m²: 1,23 x 1,48 m, Fenster > 2,3 m²: 1,48 x 2,18 m) mit einer Fensterflügelhöhe von 1,48m bewegen den Landebereich 104 dementsprechend vorzugweise mehr als 1,5 m weit von der Gebäudewand weg.

Das erfindungsgemäße Fensterelement 100a kann als separates Ganzes oder als Teilsegment eines größeren Elementes angeordnet werden. Eine vorteilhafte Ausführung ist dabei, wenn das erfindungsgemäße Fensterelement 100a als Seitenteil zu einem Fenster 115 mit einer Isolierglasscheibe ausgebildet wird. Dies ist in Fig. 20 abgebildet

Das Fassadenelement 100a kann auch in der Brüstung einer Fassade 2 eingesetzt sein. Es ist ferner möglich, dass Element 100a als ein Seitenteil einer Tür zu verwenden. Das erfindungsgemäße Fenster- oder Türelement 100a in Bodennähe - also z.B. im Erdgeschoss eingebaut- kann theoretisch auch von Fluggeräten wie Drohnen erreicht werden oder - wo dies nicht erlaubt ist - von autonom fahrenden Transportern bzw. solchen Landfahrzeugen bedient werden.

### Bezugszeichenliste

- 1: Gebäude
- 2: Fassade
- 3: Schrägdach

- 100: Fenster-, Tür, Schrägdach-, Fassadenelement
- 101: Drohne
- 102: äußerer Flügel
- 103: Vorrichtung
- 104: Landebereich
- 105: Schubvorrichtung
- 106: Aufnahmeelement
- 107: Gehäuse
- 108: Zwischenraum
- 109: innerer Flügel
- 110: Blendrahmen
- 111: Flügelrahmen
- 112: Blendrahmen
- 113: Flügelrahmen
- 114: Blendrahmen
- 115: Fenster

- K: Klappe
- T: Transportgut

## Patentansprüche

1. Fenster- oder Türelement zum Einbau in eine Gebäudeöffnung einer Wand, einer Fassade oder eines Schrägdaches, mit einer Vorrichtung zum Versand oder zum Empfang von Brief- und Paketstückgut, wobei die Vorrichtung dazu ausgelegt ist, dass das Brief- und Paketstückgut von einem unbemannten Luftfahrzeug abholbar oder zustellbar ist, wobei das Fenster- oder Türelement (100a) einen Außenflügel (102) aufweist, wobei die Vorrichtung (103) zum Empfang und Versand von Brief- oder Paketstückgut einen Landebereich (104) zum Landen des Fluggerätes für das Brief- oder Paketgut aufweist und /oder dass die Vorrichtung (103) zum Empfang und Versand von Brief- oder Paketstückgut einen Aufnahmebereich (106) zum Aufnehmen oder Ablegen des Brief- oder Paketgut aufweist, **dadurch gekennzeichnet, dass** das Fenster- oder Türelement einen Innenflügel (109) aufweist, wobei der Außenflügel (102) und der Innenflügel (109) durch einen Zwischenraum (108) voneinander getrennt sind, wobei der Zwischenraum (108) im geschlossenen Zustand des Fenster- oder Türelements (100a) die Vorrichtung (103) zum Empfang und Versand von Brief- oder Paketstückgut aufnimmt und dass die Vorrichtung (103) zum Empfang und Versand von Paketstückgut mit einem unbemannten Fluggerät eine dem Außenflügel (102) zugeordnete Schubvorrichtung (105) aufweist, mit welcher der Landebereich (104) und/oder das Aufnahmeelement (106) für das Brief- oder Paketgut teleskopartig in eine im ausgefahrenen Zustand weiter von der Fenster- oder Türebene beabstandete Position als im eingefahrenen Zustand bringbar ist.

2. Fenster- oder Türelement (100a) nach Anspruch 1, **dadurch gekennzeichnet, dass** der Zwischenraum (108) im geschlossenen Zustand sämtliche Komponenten der Vorrichtung (103) zum Empfang und Versand von Brief- oder Paketstückgut aufnimmt.

3. Fenster- oder Türelement (100a) nach Anspruch 1 oder 2, **dadurch gekennzeichnet, dass** der Zwischenraum (108) im geschlossenen Zustand zur Aufnahme des Brief- oder Paketstückgutes ausgelegt ist, und dass vorzugsweise der Zwischenraum (108) ein Gehäuse (107) zur Aufnahme des Brief- oder Paketstückgutes (103) aufweist.

4. Fenster- oder Türelement (100a) nach einem der vorstehenden Ansprüche, **dadurch gekennzeichnet, dass** der Außenflügel (102) und der Innenflügel (109) im geschlossenen Zustand parallel zueinander ausgerichtet sind.

5. Fenster- oder Türelement (100a) nach einem der vorstehenden Ansprüche, **dadurch gekennzeichnet, dass** der Außenflügel (102) um eine horizontale Drehachse schwenkbar ist, insbesondere in eine horizontale Position und/oder dass der Innenflügel (109) in einer Öffnungsbewegung um eine vertikale Achse oder horizontale Achse oder um eine Achse parallel zu einer Dachschräge drehbar oder parallel ausstellbar ausgelegt ist.

6. Fenster- oder Türelement (100a) nach einem der vorstehenden Ansprüche, **dadurch gekennzeichnet, dass** der Außenflügel (102) einen Flügelrahmen (11) und ein Flächenelement aufweist und/oder dass der Innenflügel (109) einen Flügelrahmen (113) und ein Flächenelement aufweist und/oder dass einer oder mehrere Blendrahmen vorgesehen sind, an denen der Innen- und der Außenflügel beweglich gehalten sind.

7. Fenster- oder Türelement (100a) nach einem der vorstehenden Ansprüche, **dadurch gekennzeichnet, dass** der einer, mehrere oder sämtliche der Blend- und Flügelrahmen in wärmegedämmter Ausführung ausgeführt sind, insbesondere derart, dass bei einer Verwendung von Metall, insbesondere Aluminium vorzugsweise von innen nach außen an dem jeweiligen Rahmen ein mehrschichtiger Aufbau mit einem oder mehreren Metall-, insbesondere Aluminiumprofilen und wenigstens einer dazwischen angeordneten Isolierprofilebene aus Isolierprofilen aus Kunststoff vorgesehen ist.

8. Fenster- oder Türelement (100a) nach einem der vorstehenden Ansprüche, **dadurch gekennzeichnet, dass** der Außenflügel (102) und der Innenflügel (109) mit einer Steuervorrichtung so gesteuert sind, dass sie nur zeitlich versetzt geöffnet oder geschlossen werden können.

9. Fenster- oder Türelement nach einem der vorstehenden Ansprüche 1 bis 8, **dadurch gekennzeichnet, dass** das Fenster-, Tür-, Schrägdach-, Fassadenelement (100a) zumindest einen Außenflügel (102) zum Verschließen und Öffnen einer Gebäudeöffnung aufweist, wobei diesem Außenflügel (102) eine Schubvorrichtung (105) zugeordnet ist, mit welcher ein Landebereich (104) und/oder ein Aufnahmeelement (106) für das Brief- oder Paketgut teleskopartig in eine im ausgefahrenen Zustand weiter von der Fenster-, Tür-, Schrägdach- oder Fassadenebene beabstandete Position als im eingefahrenen Zustand bringbar ist, wobei die Schubrichtung der Schubvorrichtung (105) parallel zum Außenflügel (102) bzw. zur Außenflügelebene verläuft.

10. Fenster- oder Türelement nach Anspruch 9, **dadurch gekennzeichnet, dass** der Außenflügel (102) im eingebauten Zustand in einer Wand, Fassade oder in einem Schrägdach in eine horizontale Stellung schwenkbar ist und in dieser arretierbar ist und dass die Schubrichtung (105) in der Horizontale verläuft.

11. Fenster- oder Türelement nach Anspruch 10, **dadurch gekennzeichnet, dass** als Schubvorrichtung 105 eine Teleskopschienenführung mit mehreren teleskopierbaren Schienen zwischen ein Landebereich (104) und/oder ein Aufnahmeelement (106) und dem Außenflügel (102) vorgesehen ist, wobei die Schubvorrichtung (105) vorzugsweise einen Antrieb, insbesondere einen elektromotorischen Antrieb aufweist.

## Claims

1. An element for a window or door for installation in a building opening of a wall, a façade, or a pitched roof, having a device for sending or receiving letters and parcels, wherein the device is designed so that the letters and parcels can be picked up or delivered by an unmanned air vehicle, wherein the element (100a) for a window or door comprises an outer leaf (102), wherein the device (103) for receiving and sending letters or parcels comprises a landing region (104) for landing the aircraft for the letters or parcels and/or that the device (103) for receiving and sending letters or parcels comprises a pickup region (106) for picking up or depositing the letters or parcels, **characterized in that** the lement for a window or door comprises an inner leaf (109), wherein the outer leaf (102) and the inner leaf (109) are separated from one another by an intermediate space (108), wherein the intermediate space (108) in the closed state of the element (100a) for a window or door accommodates the device (103) for receiving and sending letters or parcels and that the device (103) for receiving and sending parcels using an unmanned aircraft comprises a thrust device (105) associated with the outer leaf (102), using which the landing region (104) and/or the pickup element (106) for the letters or parcels is movable telescopically into a position spaced apart farther from the window or door in the extended state than in the retracted state.

2. The element (100a) for a window or door according to Claim 1, **characterized in that** the intermediate space (108), in the closed state accommodates all components of the device (103) for receiving and sending letters or parcels.

3. The element (100a) for a window or door according to Claim 1 oder 2, **characterized in that** the intermediate space (108) is designed in the closed state for accommodating the letters or parcels and that the intermediate space (108) comprises a housing (107) for accommodating the letters or parcels (103).

4. The element (100a) for a window or door according to any one of the preceding claims, **characterized in that** the outer leaf (102) and the inner leaf (109) are aligned in parallel to one another in the closed state.

5. The element (100a) for a window or door according to any one of the preceding claims, **characterized in that** the outer leaf (102) is pivotable around a horizontal axis of rotation, in particular into a horizontal position and/or that the inner leaf (109) is designed to be rotatable or extendable in parallel in an opening movement around a vertical axis or horizontal axis or around an axis parallel to a pitched roof.

6. The element (100a) for a window or door according to any one of the preceding claims, **characterized in that** the outer leaf (102) comprises a sash (11 **[sic; 111])** and a planar element, and/or the inner leaf (109) comprises a sash (113) and a surface element, and/or one or more fixed frames are provided, on which the inner leaf and the outer leaf are movably mounted.

7. The element (100a) for a window or door according to any one of the preceding claims, **characterized in that** the one, multiple, or all of the fixed frames and sashes are embodied in a thermally-insulated embodiment, in particular in such a way that if metal is used, in particular aluminum, a multilayered structure having one or multiple metal profiles, in particular aluminum profiles and at least one insulating profile plane arranged in between, made of insulating profiles made of plastic, is provided from the inside to the outside on the respective frame.

8. The element (100a) for a window or door according to any one of the preceding claims, **characterized in that** the outer leaf (102) and the inner leaf (109) are controlled using a control device such that they can only be opened or closed offset in time.

9. An element for a window or door according to any one of preceding Claims 1 to 8, **characterized in that** the element (100a) for a window, door, pitched roof, or façade comprises at least one outer leaf (102) for closing and opening a building opening, wherein a thrust device (105) is associated with this outer leaf (102), using which a landing region (104) and/or a pickup element (106) for the letters or parcels can be moved telescopically into a position spaced apart farther from the window, door, pitched roof, or façade plane in the extended state than in the retracted state, wherein the thrust direction of the thrust device (105) extends in parallel to the outer leaf (102) or the outer leaf plane.

10. The element for a window or door according to Claim 9, **characterized in that** the outer leaf (102) is pivotable in the installed state in a wall, façade, or in a pitched roof into a horizontal position and is lockable in this position, and the thrust direction (105) extends in the horizontal.

11. The element for a window or door according to Claim 10, **characterized in that** a telescoping rail guide having multiple telescoping rails is provided between a landing region (104) and/or a pickup element (106) and the outer leaf (102) as the thrust device (105), wherein the thrust device (105) comprises a drive, in particular an electromotive drive.

## Revendications

1. Élément de fenêtre ou de porte à monter dans une ouverture de bâtiment d'un mur, d'une façade ou d'une toiture inclinée, avec un dispositif pour l'envoi ou la réception de lettres ou de paquets, lequel dispositif est conçu pour que les lettres ou les paquets puissent être récupérés ou déposés par un aéronef sans pilote, l'élément de fenêtre ou de porte (100a) comportant un vantail extérieur (102), dans lequel le dispositif (103) pour l'envoi et la réception de lettres ou de paquets comporte une zone d'atterrissage (104) pour l'atterrissage de l'aéronef pour les lettres ou les paquets et/ou en ce que le dispositif (103) pour l'envoi et la réception de lettres ou de paquets comporte une zone de réception (106) pour la réception ou le dépôt des lettres ou des paquets, **caractérisé en ce que** l'élément de fenêtre ou de porte comporte un vantail intérieur (109), le vantail extérieur (102) et le vantail intérieur (109) étant séparés l'un de l'autre par un espace intermédiaire (108), lequel espace intermédiaire (108) reçoit le dispositif (103) pour l'envoi et la réception de lettres ou de paquets dans l'état fermé de l'élément de fenêtre ou de porte (100a), et **en ce que** le dispositif (103) pour la réception et l'envoi de paquets avec un aéronef sans pilote comporte un dispositif de poussée (105) associé au vantail extérieur (102), avec lequel la zone d'atterrissage (104) et/ou l'élément de logement (106) pour les lettres ou les paquets peut être amené de façon télescopique dans une position plus éloignée du plan de la fenêtre ou de la porte dans un état déployé que dans l'état rétracté.

2. Élément de fenêtre ou de porte (100a) selon la revendication 1, **caractérisé en ce que** l'espace intermédiaire (108) reçoit, dans l'état fermé, tous les composants du dispositif (103) pour l'envoi et la réception de lettres ou de paquets.

3. Élément de fenêtre ou de porte (100a) selon la revendication 1 ou 2, **caractérisé en ce que** l'espace intermédiaire (108) est conçu, dans l'état fermé, pour recevoir les lettres ou les paquets et **en ce que**, de préférence, l'espace intermédiaire (108) comporte un boîtier (107) pour recevoir les lettres ou les paquets (103).

4. Élément de fenêtre ou de porte (100a) selon l'une des revendications précédentes, **caractérisé en ce que** le vantail extérieur (102) et le vantail intérieur (109) sont orientés parallèlement l'un à l'autre dans l'état fermé.

5. Élément de fenêtre ou de porte (100a) selon l'une des revendications précédentes, **caractérisé en ce que** le vantail extérieur (102) est capable de basculer autour d'un axe horizontal, en particulier dans une position horizontale, et/ou **en ce que** le vantail intérieur (109) peut être tourné ou écarté parallèlement dans un mouvement d'ouverture autour d'un axe vertical ou d'un axe horizontal ou autour d'un axe parallèle à une pente du toit.

6. Élément de fenêtre ou de porte (100a) selon l'une des revendications précédentes, **caractérisé en ce que** le vantail extérieur (102) comporte un châssis de vantail (11) et un élément plat et/ou **en ce que** le vantail intérieur (109) comporte un châssis de vantail (113) et un élément plat et/ou **en ce qu'**un ou plusieurs châssis dormants sont prévus, sur lesquels les vantaux intérieur et extérieur sont retenus de façon mobile.

7. Élément de fenêtre ou de porte (100a) selon l'une des revendications précédentes, **caractérisé en ce qu'**un, plusieurs ou tous les châssis de dormant et de vantail sont réalisés avec une isolation thermique, en particulier de sorte que, si du métal est utilisé, en particulier de l'aluminium, une structure en plusieurs couches est prévue, de préférence de l'intérieur vers l'extérieur sur le châssis correspondant, avec un ou plusieurs profilés métalliques, en particulier en aluminium, et au moins un plan isolant disposé entre ceux-ci, fait de profilés isolants en matière plastique.

8. Élément de fenêtre ou de porte (100a) selon l'une des revendications précédentes, **caractérisé en ce que** le vantail extérieur (102) et le vantail intérieur (109) sont contrôlés par une unité de commande de telle manière qu'ils ne puissent être ouverts ou fermés que de façon décalée dans le temps.

9. Élément de fenêtre ou de porte selon l'une des revendications 1 à 8, **caractérisé en ce que** l'élément de fenêtre, de porte, de pente de toit, de façade (100a) comporte au moins un vantail extérieur (102) pour fermer et ouvrir une ouverture de bâtiment, ce vantail extérieur (102) étant associé à un dispositif de poussée (105) avec lequel une zone d'atterrissage (104) et/ou un élément de logement (106) pour les lettres ou les paquets peuvent être amenés de façon télescopique dans une position plus éloignée du plan de la fenêtre, porte, toiture inclinée ou de la façade dans un état déployé que dans l'état rétracté, le sens de poussée du dispositif de poussée (105) étant parallèle au vantail extérieur (102) ou au plan du vantail extérieur.

10. Élément de fenêtre ou de porte selon la revendication 9, **caractérisé en ce que** le vantail extérieur (102) dans l'état monté dans un mur, une façade ou une toiture en pente peut basculer dans une position horizontale et être bloqué dans celle-ci et **en ce que** le sens de poussée (105) est horizontal.

11. Élément de fenêtre ou de porte selon la revendication 10, **caractérisé en ce que** le dispositif de poussée (105) est un guide sur rails télescopiques muni de plusieurs rails télescopiques entre une zone d'atterrissage (104) et/ou un élément de logement (106) et le vantail extérieur (102), le dispositif de poussée (105) comportant de préférence un entraînement, en particulier un entraînement à moteur électrique.
